Europäisches Patentamt

**European Patent Office**

Office européen des brevets

(19)

(11) Publication number: **0 027 315**
**B1**

(12) **EUROPEAN PATENT SPECIFICATION**

(45) Date of publication of patent specification: **14.12.83**

(21) Application number: **80303207.7**

(22) Date of filing: **11.09.80**

(51) Int. Cl.³: **F 02 F 7/00, F 04 D 29/66,
B 60 R 13/08, G 10 K 11/00**

(54) Machinery with noise suppression screen.

(30) Priority: **10.10.79 PC T/US79/00836**

(43) Date of publication of application:
**22.04.81 Bulletin 81/16**

(45) Publication of the grant of the patent:
**14.12.83 Bulletin 83/50**

(84) Designated Contracting States:
**FR GB IT**

(56) References cited:
**DE - A - 2 240 709
DE - A - 2 529 766
DE - A - 2 655 441
DE - B - 1 029 143
DE - B - 2 501 052
DE - U - 7 309 254
DE - U - 7 538 836
FR - A - 2 240 858
FR - A - 2 378 646
GB - A - 1 369 524
GB - A - 1 481 855**

(73) Proprietor: **CATERPILLAR TRACTOR CO.
100 Northeast Adams Street
Peoria Illinois 61629 (US)**

(72) Inventor: **Simmons, Gerald P.
1006 Miller
Washington Illinois 61571 (US)**

(74) Representative: **Jackson, Peter Arthur et al,
GILL JENNINGS & EVERY 53-64 Chancery Lane
London WC2A 1HN (GB)**

(56) References cited:

**US - A - 2 855 039
US - A - 3 762 489
US - A - 3 820 629**

**SOUND AND VIBRATION, Vol. 8, No. 2 February
1974, Bay Village, Ohio, J.F. WOODALL
"Quieting the JT3D Powered 707" pages 20 to
25**

Courier Press, Leamington Spa, England.

Machinery with noise suppression screen

The invention relates to noise emitting machinery, such as a vehicle or other engine or a compressor or turbine, having a housing provided with a noise suppression screen.

Internal combustion engines and their accessories, such as an engine-driven cooling fan, emit an appreciable amount of noise or acoustical energy during operation. Such energy is commonly measured by its level of intensity and its frequency range, man being highly sensitive to frequencies in the range of from 800 Hz to 3,000 Hz. One approach to the damping or attenuation of the noise to an acceptable level is to provide the engine housing with a noise suppression screen comprising baffles in the form of a plurality of louvres mounted on one or more sides thereof with the louvres including acoustical material in the form of pads. Although the louvres function efficiently they only absorb a portion of the acoustical energy emitted from the engine.

Conventional louvre arrangements are also somewhat bulky and exhibit relatively high space to sound absorption efficiency ratios.

One cumbersome attempt at providing a noise suppression housing is illustrated in German Utility Model specification No. 7309254. This involves the use of a large number of absorbing perforated walls surrounding the machinery and is very bulky.

An example of a noise suppression screen is shown in French Patent Specification No. 2,378,646. This screen has three louvres made of acoustic material for absorbing sound energy but is not very efficient.

In accordance with the invention, an assembly of noise emitting machinery and a housing for the machinery is provided with a noise suppression screen comprising sound attenuating means for permitting the free passage of ambient air into the housing and for suppressing sound waves emanating, in use, from the machinery within the housing towards the screen; the sound attenuating means including acoustical energy absorption means, comprising acoustical pads and a respective perforated plate mounted on at least that face of each pad facing into the engine housing, for directly absorbing a substantial portion of the sound waves $(S_1)$, characterised in that the sound attenuating means further includes sound reflecting means co-operating with the absorption means to define baffles disposed in nested and overlapped relationship relative to one another for providing a substantially optically dense (as herein defined) view from within the housing, for providing an unobstructed passage to permit the flow of ambient air through the assembly and for reflecting and/or for absorbing substantially all of the sound waves $(S_2, S_3)$ not absorbed directly by the acoustical energy absorption means.

In this context, "optically dense" means there is no direct line of sight through the screen from one side to the other.

The sound attenuating means thus provides for the efficient absorption of acoustical energy and may exhibit a compact and narrow profile adapting it for limited space requirements to provide a relatively low space to sound absorption efficiency ratio.

The noise suppression screen may be mounted on one or more sides of the housing.

The reflecting means may be provided by arcuate plates the concave sides of which substantially face the acoustical energy absorption means of an adjacent baffle.

In a compact construction, each of the baffles comprises one of the pads and its respective perforated plate fixed to a respective one of the arcuate plates.

Alternatively, each alternate baffle may be provided with a respective one of the acoustic pads and the intervening baffles are each provided with a pair of the arcuate plates each co-operating with a respective one of the two adjacent baffles.

Some examples of assemblies in accordance with the present invention are illustrated in the accompanying diagrammatic drawings, in which:—

Figure 1 is an isometric view of part of a vehicle engine having one example of a noise suppression screen;

Figure 2 is a section part taken on the line II—II in Figure 1;

Figure 3 is an enlarged, transverse sectional view taken on the line III—III in Figure 1;

Figure 4 is a view similar to Figure 3, but illustrating a second example of a noise suppression screen; and,

Figure 5 is a view similar to Figure 3, but illustrating a third example of a noise suppression screen.

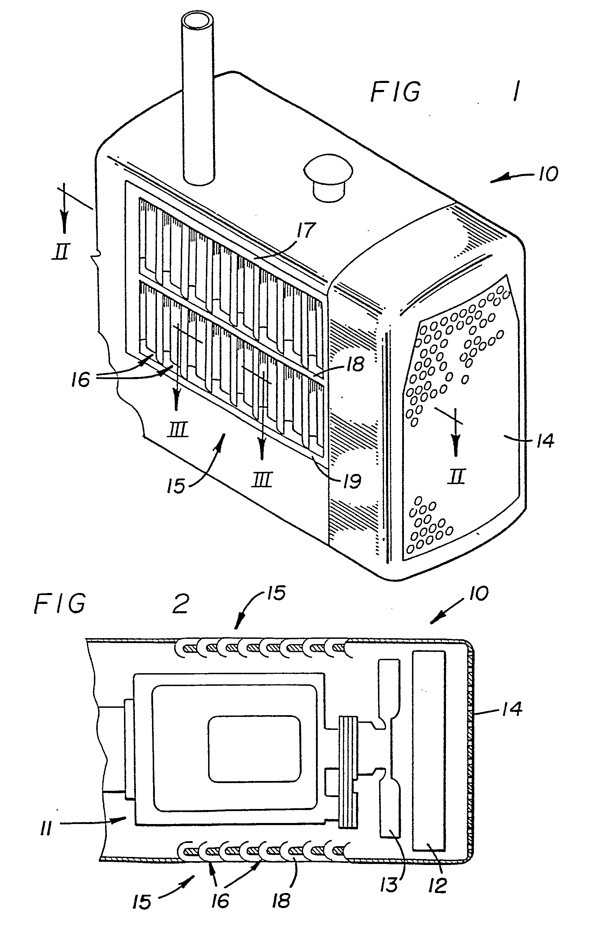

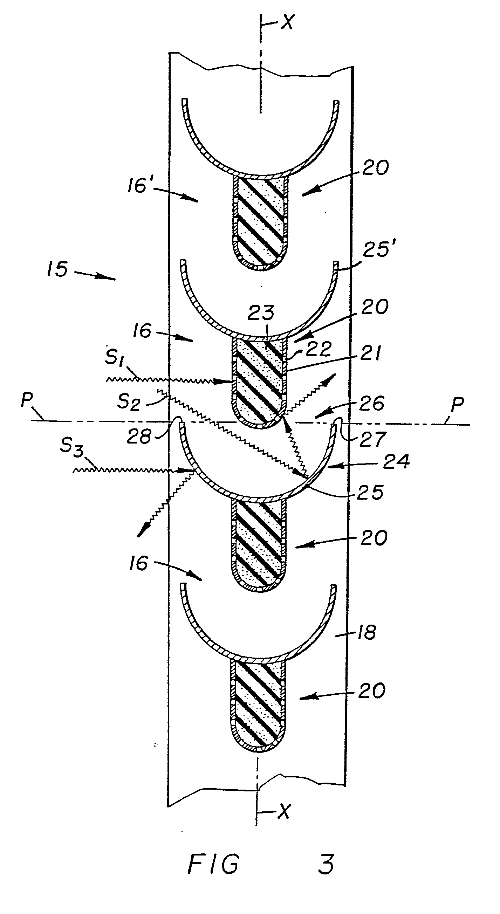

Figures 1 and 2 illustrate an engine housing 10, having an internal combustion engine 11 mounted therein. The engine 11 is cooled in a conventional manner by a radiator 12 and an engine-driven fan 13, mounted forwardly of the engine and protected by a perforated guard 14. Ambient air passes into the engine housing 10 through a pair of noise suppression screens 15, mounted one on each side of the engine housing.

As is more clearly shown in Figure 1, each noise suppression screen comprises upper and lower sets of vertically disposed and longitudinally spaced sound attenuating baffles 16, secured between vertically spaced plates 17, 18 and 19. The structurally integrated noise suppression screens 15 may be integrally secured on respective sides of the engine housing 10 or may be mounted on hinges (not shown) in a conventional manner to provide access to within the engine housing. As more fully discussed hereinafter, each noise suppression screen 15 permits the free ingress of ambient air into engine housing 10 and further functions to intercept and absorb acoustical energy emanating from within the engine housing.

Referring to Figure 3, each sound attenuating baffle comprises an acoustical energy absorption means 20, including a metal plate 21 of U-shaped cross section having a series of perforations 22 formed therethrough. In addition, a pad 23, composed of a standard acoustical material such as polyurethane foam, is suitably mounted within plate 21.

Each sound attenuating baffle 16 further comprises a reflecting means 24, shown in the form of an arcuate metal plate 25 which co-operates with a respective acoustical energy absorption means 20 to provide an unobstructed passage 26 to communicate ambient air to the engine side of the screen 15. Reflecting means 24 further co-operates with sound absorption means 20 to provide an optically dense view from the engine housing through the screen 15 whereby sound waves are reflected and absorbed thereby.

In particular, a vertically disposed imaginary plane $P$ intersects opposite ends 27 and 28 of the plate 25, as well as absorption means 20. Otherwise stated, absorption means 20 and reflecting means 24 are disposed in nested relationship whereby they overlap each other to provide the optically dense relationship. In addition to providing unrestricted airflow through passages 26 and efficiently to intercept and absorb sound waves emitted from within the engine housing 10, each sound attenuating baffle 16 is compact to exhibit a narrow profile. Thus, the space to sound absorption efficiency ratio may be kept quite low in comparison to conventional noise suppression arrangements.

It should be noted in Figure 3 that absorption means 20 are symmetrically disposed along with plates 25 relatively to a central plane $X$ of the screen 15. Also, the plate 21 is secured on a convex side of a plate 25 and faces a concave side of the plate 25 of the adjacent baffle.

Referring again to Figure 3, the intensities and frequencies of a substantial portion of sound waves emitted from the left or engine side of noise suppression screen 15 are damped and absorbed by acoustical energy absorption means 20, as schematically depicted by sound wave $S_1$. It will be understood by those skilled in the art that sound wave $S_1$ is merely representative of the acoustical energy inherent with respect to the noise emanating from within housing 10 and that noise, in contrast to a musical sound, for example, has no single fundamental frequency with harmonic overtones, but rather consists of a series of random displacements with little semblance of regularity of any kind. Furthermore, the term sound or acoustical energy absorption is well known in the art to mean that such energy changes into another form, generally heat, when it contacts a solid body, such as energy absorption means 20 and, to a lesser extent, reflecting means 24.

As further depicted in Figure 3, a sound wave $S_2$, which is not directly intercepted by absorption means 20, will be intercepted and deflected by plate 25 of sound reflecting means 24, to redirect the sound wave to absorption means 20. Some sound waves may be deflected by plates 25 and egress to ambient directly, through passage 26, but others $S_3$ will deflect off the backside of plate 25 and back inside the housing 10, without being intercepted by absorption means 20. As suggested above, even metal plates 21 and 25 will themselves absorb some of the acoustical energy.

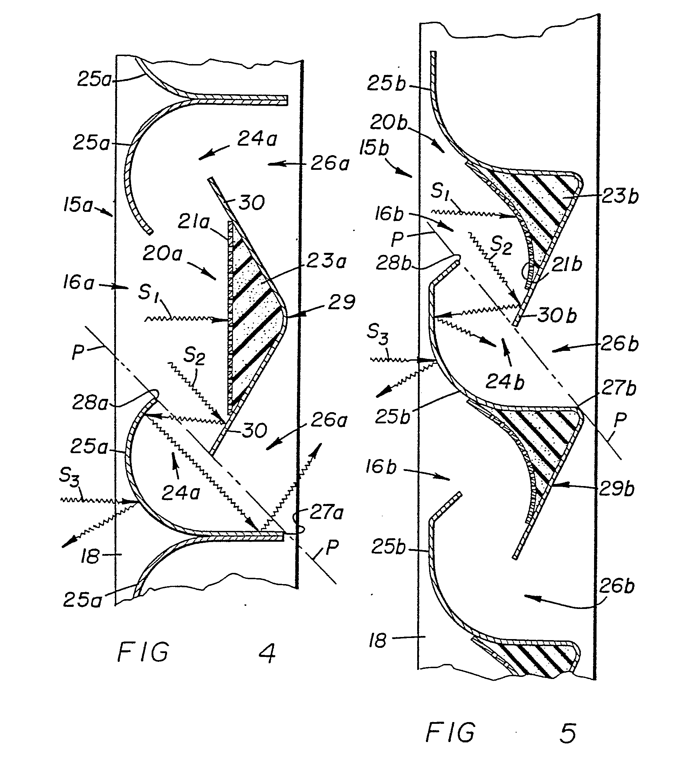

Figure 4 illustrates a second noise suppression screen 15a wherein identical numerals depict corresponding parts to those of the first screen but with the numerals appearing in Figure 4 depicting modified constructions being accompanied by a subscript "a". Noise suppression screen 15a comprises a plurality of vertically disposed and horizontally spaced sound attenuating baffles 16a each including an acoustical absorption means 20a (one shown in Figure 4) for directly absorbing a substantial portion of sound waves $S_1$ emitted from the left or engine side thereof. Acoustical energy absorption means 20a includes a perforated flat plate 21a, bonded or otherwise suitably secured to an acoustical pad 23a, along with a back-up plate 29 generally having a V-shaped cross section.

The screen further comprises sound reflecting baffles 24a, shown in the form of a pair of plates 25a each having an arcuate cross section. End extensions 30 of the plates 29 provide further sound reflecting means which are positioned to provide an optically dense view from within the engine housing 10. In particular, a plane $P$ intersects ends 27a and 28a of each plate 25a and, further, at least approximately intersects a respective extension 30 of plate 29.

As depicted by sound wave $S_2$, some of the sound waves emanating within engine housing 10 will miss the acoustical energy absorption means 20a, but will be intercepted by the extension 30 of the plate 29 of the sound reflecting means 24a. As further depicted by sound wave $S_3$, additional sound waves will be deflected by the backside of the plate 25a and back into the engine housing. A portion of the sound waves which are thus reflected by only the sound reflecting means 24a will be at least partially absorbed thereby to dissipate acoustical energy. It should be noted that each sound attenuating baffle 16a separates a pair of unobstructed airflow passages 26a.

Figure 5 illustrates a third noise suppression screen 15b wherein identical numerals depict corresponding parts to those of the first and second screens, but with the numerals appearing in Figure 5 depicting modified constructions being accompanied by a subscript "b". The noise suppression screen 15b comprises a plurality of vertically disposed and horizontally spaced sound attenuating baffles 16b, each including an acoustical energy absorption means 20b and a sound reflecting means 24b. Acoustical energy absorption means 20b includes a perforated plate 21b, having an arcuate cross section, bonded or otherwise suitably secured to an acoustical pad 23b, along with a backup plate 29b.

A sound reflecting means 24b comprises end extensions 25b and 30b of plate 29b and co-operating with sound absorption means 20b to provide an unobstructed airflow passage 26b therethrough and to further provide an optically dense view from within the engine housing 10. In particular, it should be noted in Figure 5 that an imaginary vertical plane $P$ will at least approximately intersect an apex portion 27b of plate 29b, an end 28b of extension 25b, and extension 30b. Therefore, a substantial portion of the sound waves, depicted by arrow $S_1$, will be directly absorbed by acoustical means 20b, whereas a remaining portion of such sound waves, depicted by arrows $S_2$ and $S_3$, will be deflected and the energy thereof at least partially absorbed by sound reflecting means 24b.

Noise suppression screens 15, 15a, and 15b find particular application to the type of engine housing 10, illustrated in Figure 1. Although the selected noise suppression arrangement is preferably disposed vertically on each lateral side of engine housing 10, it should be understood by those skilled in the arts relating hereto that such arrangement may be otherwise disposed, such as horizontally and on the bottom, top and/or front side of the engine housing. Furthermore, the noise suppression screen will find other applications, in addition to those associated with engine housing 10, wherein the provision of a sound barrier is desired to contain acoustical energy to reduce ambient noises to an acceptable level.

Referring to Figures 3 to 5, substantial portions of the sound waves will be absorbed directly by the respective acoustical energy absorption means 20, 20a, and 20b, as depicted by arrows $S_1$. Remaining portions of the sound waves, as depicted by arrows $S_2$ and $S_3$, which do not contact the acoustical energy absorption means directly will be deflected and the energy thereof at least partially dissipated to further lower the overall noise level. As illustrated by arrow $S_2$ in Figure 3, some of the latter sound waves will, in fact, be reflected back to acoustical energy absorption means 20. Other sound waves, as depicted by arrows $S_3$ in Figures 3 to 5, will deflect back into engine housing 10 (Figure 2) wherein they will be further dissipated.

The above-described noise suppression screens 15, 15a, and 15b will thus provide for the free ingress of airflow into engine housing 10 via passages 26, 26a and 26b while yet providing for a substantial attenuation of the noise emanating therefrom. In addition, the absorption means (20, 20a, 20b) and sound reflecting means (24, 24a, 24b) will provide for the compact nesting thereof together whereby the respective noise suppression screens will exhibit a compact and narrow profile, as exemplified by noise suppression screen 15 in Figure 2. Thus, the space to sound absorption efficiency ratio thereof is substantially low relative to conventional noise suppression screens.

**Claims**

1. An assembly of noise emitting machinery and a housing (10) for the machinery, the housing being provided with a noise suppression screen (15, 15a, 15b), comprising sound attenuating means (16, 16a, 16b) for permitting the free passage of ambient air into the housing (10) and for suppressing sound ($S$) emanating, in use, from the machinery within the housing (10) towards the screen; the sound attenuating means (16, 16a, 16b) including acoustical energy absorption means (20, 20a, 20b), comprising acoustical pads (23, 23a, 23b) and a respective perforated plate (21, 21a, 21b) mounted on at least that face of each pad facing into the engine housing, for directly absorbing a substantial portion of the sound waves ($S_1$), characterised in that the sound attenuating means further includes sound reflecting means (24, 24a, 24b) co-operating with the absorption means to define baffles disposed in nested and overlapped relationship relative to one another for providing a substantially optically dense (as hereinbefore defined) view from within the housing (10), for providing an unobstructed passage (26, 26a, 26b) to permit the flow of ambient air through the assembly and for reflecting and/or for absorbing substantially all of the sound waves ($S_2, S_3$) not absorbed directly by the acoustical energy absorption means.

2. An assembly according to claim 1, wherein the reflecting means are provided by arcuate plates (25, 25a, 25b) the concave sides of which substantially face the acoustical energy absorption means (20, 20a, 20b) of an adjacent baffle.

3. An assembly according to claim 2, wherein each of the baffles comprises one of the pads (23, 23b) and its respective perforated plate (21, 21b) fixed to a respective one of the arcuate plates (25, 25b).

4. An assembly according to claim 3, wherein an extension (29b) of each of the arcuate plates (25b) provides a back-up for the respective acoustical pad (23b).

5. An assembly according to claim 3, wherein each of the perforated plates (21) is U-shaped and contains the respective acoustical pad (23), the arms of the U being fixed to the convex surface of the respective arcuate plate (25), and the base of the U projecting substantially symmetrically to the overall plane of the screen towards the concave surface of the arcuate plate of the adjacent baffle.

6. An assembly according to claim 2, wherein each alternate baffle is provided with a respective one of the acoustic pads (23) and the intervening baffles are each provided with a pair of the arcuate plates (25a) each co-operating with a respective one of the two adjacent baffles.

## Patentansprüche

1. Eine Anordnung aus einer geräuschemitierenden Maschine und einem Gehäuse (10) für die Maschine, wobei das Gehäuse mit einem Geräuschunterdrückungsschirm (15, 15a, 15b) ausgestattet ist, der Schalldämpfungsmittel (16, 16a, 16b) aufweist, um den freien Durchgang von Umgebungsluft in das Gehäuse (10) zu gestatten, und um Schallwellen (S) zu unterdrücken, die im Gebrauch von der Maschine innerhalb des Gehäuses (10) zum Schirm hin ausgehen, und wobei die Schalldämpfungsmittel (16, 16a, 16b) akustische Energieabsorptionsmittel (20, 20a, 20b) aufweisen, die akustische Kissen (23, 23a, 23b) und eine entsprechende gelochte Platte (21, 21a, 21b) aufweisen, und zwar angebracht an mindestens der Stirnfläche jedes Kissens, die in das Motorgehäuse weist, um direkt einen beträchtlichen Teil der Schallwellen $(S_1)$ zu absorbieren, dadurch gekennzeichnet, daß die Schalldämpfungsmittel ferner Schallreflexionsmittel (24, 24a, 24b) aufweisen, welche mit den Absorptionsmitteln zusammenarbeiten, um Prallplatten, angeordnet in eingesetzter und überlappender Beziehung bezüglich einander zu definieren, um so eine im wesentlichen optisch dichte (wie zuvor definiert) Sicht von innerhalb des Gehäuses (10) vorzusehen, um einen nicht gestörten Durchlaß (26, 26a, 26b) vorzusehen, um so den Fluß von Umgebungsluft durch die Anordnung zu gestatten, und um im wesentlichen sämtliche Schallwellen $(S_2, S_3)$, die nicht direkt durch die akustischen Energieabsorptionsmittel absorbiert werden, zu reflektieren und/oder zu absorbieren.

2. Anordnung nach Anspruch 1, wobei die reflektierenden Mittel durch bogenförmige Platten (25, 25a, 25b) vorgesehen sind, deren konkave Seiten im wesentlichen zu den akustischen Energieabsorptionsmitteln (20, 20a, 20b) einer benachbarten Prallplatte hinweisen.

3. Anordnung nach Anspruch 2, wobei jede der Prallplatten eines der Kissen (23, 23b) aufweist und seine entsprechende gelochte Platte (21, 21b) an einer entsprechenden der bogenförmigen Platten (25, 25b) befestigt ist.

4. Anordnung nach Anspruch 3, wobei eine Verlängerung (29b) jeder der bogenförmigen Platten (25b) eine Stützung für das entsprechende akustische Kissen (23b) vorsieht.

5. Anordnung nach Anspruch 3, wobei jede der gelochten Platten (21) U-förmig ist und das entsprechende akustische Kissen (23) enthält, wobei die Arme des U an der konvexen Oberfläche der entsprechenden bogenförmigen Platte (25) befestigt sind, und wobei die Basis des U im wesentlichen symmetrisch zur Gesamtebene des Schirms zur konkaven Oberfläche der bogenförmigen Platte der benachbarten Prallplatte vorragt.

6. Anordnung nach Anspruch 2, wobei jede der alternativen Prallplatten mit einem entsprechenden der akustischen Kissen (23) ausgestattet ist, und wobei die dazwischen laufenden Prallplatten jeweils mit einem Paar von bogenförmigen Platten (25a) ausgestattet sind, deren jede mit einer entsprechenden der beiden benachbarten Prallplatten zusammenarbeitet.

## Revendications

1. Ensemble d'une machine émettant des bruits et d'un capot (10) pour la machine, le capot étant pourvu d'un écran atténuateur de bruit (15, 15a, 15b) comprenant des moyens d'atténuation du son (16, 16a, 16b) pour permettre le libre passage de l'air ambiant à l'intérieur du capot (10) et pour supprimer les ondes acoustiques (S) émanant, pendant l'utilisation, de la machine à l'intérieur du capot (10) vers l'écran; les moyens d'atténuation du son (16, 16a, 16b) comprenant des moyens d'absorption d'énergie acoustique (20, 20a, 20b), comprenant des garnitures acoustiques (23, 23a, 23b) et une plaque perforée correspondante (21, 21a, 21b) montée sur au moins la face de chaque garniture tournée vers l'intérieur du capot du moteur, afin d'absorber directement une partie appréciable des ondes acoustiques $(S_1)$, caractérisé en ce que les moyens d'atténuation du son comprennent en outre des moyens de réflexion du son (24, 24a, 24b) coopérant avec les moyens d'absorption pour définir des cloisons disposées dans une relation emboîtée et recouvrante les unes par rapport aux autres afin de produire un champ visuel pratiquement optiquement dense (comme décrit ici) depuis l'intérieur du capot (10), afin de produire un passage non obstrué (26, 26a, 26b) pour permettre la circulation de l'air ambiant à travers l'ensemble et afin de réfléchir et/ou d'absorber pratiquement toutes les ondes acoustiques $(S_2, S_3)$ non directement absorbées par les moyens d'absorption d'énergie acoustique.

2. Ensemble selon la revendication 1, dans lequel les moyens de réflexion sont constitués par des plaque arquées (25, 25a, 25b) dont les côtés concaves font pratiquement face aux moyens d'absorption d'énergie acoustique (20, 20a, 20b) d'une cloison adjacente.

3. Ensemble selon la revendication 2, dans lequel chacune des cloisons comprend l'une des garnitures (23, 23b) et la plaque perforée correspondante (21, 21b) fixée respectivement à l'une des plaques arquées (25, 25b).

4. Ensemble selon la revendication 3, dans lequel un prolongement (29b) de chacune des plaques arquées (25b) sert de renfort à la garniture acoustique correspondante (23b).

5. Ensemble selon la revendication 3, dans lequel chacune des plaques perforées (21) a une forme en U et contient la garniture acoustique correspondante (23), les branches du U étant fixées à la surface convexe de la plaque arquée correspondante (25), tandis que la base du U s'avance pratiquement symétriquement au plan général de l'écran vers la surface concave de la plaque arquée de la cloison adjacente.

6. Ensemble selon la revendication 2, dans lequel chaque cloison alternée est pourvue de l'une des garnitures acoustiques (23), tandis que les cloisons intermédiaires sont pourvues chacune de deux plaques arquées (25a) dont chacune coopère avec l'une des deux cloisons adjacentes.

FIG 1

FIG 2

FIG     3

FIG 4

FIG 5